# EUROPEAN PATENT APPLICATION

(11) **EP 3 531 265 A1**
(43) Date of publication of application: **28.08.2019**
(21) Application number: 17866977.6
(22) Date of filing: 02.11.2017
(51) Int. Cl.: G06F 3/06

(54) **DRAM-BASED STORAGE CACHE METHOD AND INTELLIGENT TERMINAL**

(30) Priority: 02.11.2016 CN 201610946703
(71) Applicant: Huawei Technologies Co., Ltd., Longgang District Shenzhen, Guangdong 518129 (CN)
(72) Inventor: MIAO, Xie, Shenzhen Guangdong 518129 (CN); WANG, Yijing, Shenzhen Guangdong 518129 (CN); WANG, Bintian, Shenzhen Guangdong 518129 (CN); CHEN, Qiulin, Shenzhen Guangdong 518129 (CN)
(74) Representative: Gill Jennings & Every LLP
(86) International application number: PCT/CN2017/109136
(87) International publication number: WO 2018/082616

(57) **Abstract**

Embodiments of the present invention provide a DRAM-based storage caching method, applied to a smart terminal, and the method includes: capturing an IO delivered by an upper-layer application (S310); determining, according to based on a configuration policy, whether the IO belongs to a to-be-cached IO type (S320); and when the IO belongs to a prespecified to-be-cached IO type, performing a corresponding caching operation for the IO in a DRAM disk based on a read/write type of the IO and a preset caching policy (S330), where the DRAM disk is a block device created by using a reserved part of DRAM space of an operating system.

## Description

This application claims priority to Chinese Patent Application No. 201610946703.2, filed with the Chinese Patent Office on November 02, 2016 and entitled "DRAM-BASED STORAGE CACHING METHOD AND DRAM-BASED SMART TERMINAL", which is incorporated herein by reference in its entirety.

### TECHNICAL FIELD

The present invention relates to the storage field, and in particular, to a DRAM-based storage caching method and a DRAM-based smart terminal.

### BACKGROUND

Currently, smart terminal products mainly use an eMMC that is similar to an SSD (Solid State Drives, solid state drive), as a storage medium. Advantages of this flash medium over a conventional storage medium are better random read/write performance, lower power consumption, and higher storage density. However, flash storage media also have distinct disadvantages. For example, performance of random small-sized IOs is still far below performance of large-sized sequential IOs, and a quantity of writes on the storage medium is limited, while the quantity of writes directly affects a service life of the storage device.

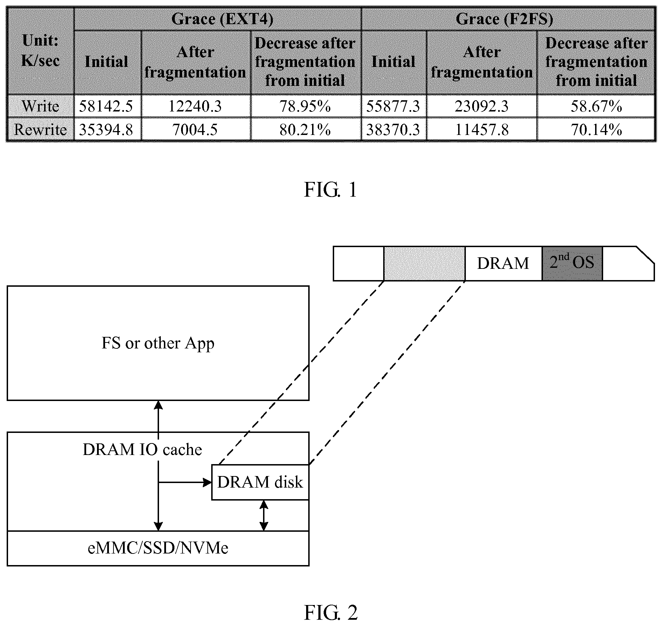

Currently, in the industry, to evenly write a storage medium, usually an additional writing manner is used. In this manner, a large amount of space debris tends to be generated in the storage medium, and when there is more space debris, more IOs are generated during access to a file. FIG. 1 shows test data of IO write and IO rewrite performance before and after fragmentation of storage space. It can be seen that IO performance after fragmentation declines drastically. This is because, after the storage device is seriously fragmented, an IO write is split into a plurality of IOs due to fragmentation of the space. As a result, a quantity of IOs delivered to a bottom-layer block device is increased, and a size of each IO is reduced.

However, compared with a large-sized IO, a small-sized IO entails more additional non-IO data overheads (for example, a quantity of IO commands) on a full path of IO transmission, and this leads to drastic decline of the IO performance.

### SUMMARY

Embodiments of the present invention provide a DRAM-based storage caching method and a DRAM-based smart terminal, to improve IO performance.

One aspect of the present invention provides a DRAM-based storage caching method, applied to a smart terminal, where the method includes:
capturing an IO delivered by an upper-layer application;
determining, according to based on a configuration policy, whether the IO belongs to a to-be-cached IO type; and
when the IO belongs to a prespecified to-be-cached IO type, performing a corresponding caching operation for the IO in a DRAM disk based on a read/write type of the IO and a preset caching policy, where the DRAM disk is a block device created by using a reserved part of DRAM space of an operating system.

In a possible implementation, the determining, according to based on a configuration policy, whether the IO belongs to a prespecified to-be-cached IO type includes:
determining a size relationship between a size of the IO and a preset threshold; and
when the size of the IO is smaller than the preset threshold, determining that the IO belongs to a to-be-cached IO type.

In a possible implementation, the determining, according to based on a configuration policy, whether the IO belongs to a prespecified to-be-cached IO type specifically includes:
determining whether a type of the IO is a user-prespecified IO type; and
when the type of the IO is a user-prespecified IO type, determining that the IO belongs to a to-be-cached IO type, where the user-prespecified IO type is a hot data IO or a random IO.

In a possible implementation, the DRAM disk is a block device created by using a reserved DRAM. In an embodiment, this DRAM region is masked by using bottom-layer firmware, so that the DRAM is invisible to an OS, avoiding that the DRAM is allocated to another module by the operating system for use. In an embodiment, alternatively, this DRAM region may be set to be reserved when bottom-layer firmware reports system global memory information to the OS, to avoid allocation to another module.

In a possible implementation, this reserved DRAM section may be continuous space. In another embodiment, alternatively, this reserved DRAM section may be discontinuous space.

In a possible implementation, the performing a corresponding caching operation for the IO in a DRAM disk based on a read/write type of the IO and a preset caching policy includes:
determining a read/write type of the IO; and
when the IO is a write IO, caching the write IO in the DRAM disk; or
when the IO is a read IO, reading data operated by the read IO and caching the data in the DRAM disk.

In a possible implementation, the method further includes:
when the DRAM disk is short of space, selecting to flush dirty data back into a bottom-layer device according to a preset policy.

In a possible implementation, the method further includes:
in a case of a normal switch-off of the smart terminal, before the switch-off, flushing all dirty data cached in the DRAM disk back into the bottom-layer device, and disabling caching or setting the caching policy to write-through.

In a possible implementation, the method further includes:
in a case of a forced switch-off or a restart of the smart terminal, at the beginning of the forced switch-off or the restart, flushing back the dirty data, and disabling caching or setting the caching policy to write-through.

Another aspect of the embodiments of the present invention provides a terminal provided with a DRAM, where the terminal includes:
a capture module, configured to capture an IO delivered by an upper-layer application;
a judgment module, configured to determine, according to based on a configuration policy, whether the IO captured by the capture module belongs to a to-be-cached IO type; and
a caching operation module, configured to: when the IO captured by the capture module belongs to a to-be-cached IO type, perform a corresponding caching operation for the IO in a DRAM disk based on a read/write type of the IO and a preset caching policy, where the DRAM disk is a block device created by using a reserved part of DRAM space of an operating system of the terminal.

In a possible implementation, the judgment module includes:
a first judgment unit, configured to determine a size relationship between a size of the IO captured by the capture module and a preset threshold; and
a determining unit, configured to: when the first judgment unit determines that the size of the IO is smaller than the preset threshold, determine that the IO belongs to a to-be-cached IO type.

In a possible implementation, the judgment module includes:
a first judgment unit, configured to determine whether a type of the IO is a user-prespecified IO type; and
a determining unit, configured to: when the first judgment unit determines that the type of the IO is a user-prespecified IO type, determine that the IO belongs to a to-be-cached IO type, where the user-prespecified IO type is a hot data IO or a random IO.

In a possible implementation, the caching operation module includes:
a judgment unit, configured to: when the first judgment unit determines that the size of the IO is smaller than the preset threshold or that the type of the IO is a user-prespecified IO type, determine a read/write type of the IO; and
a caching unit, configured to: when the second judgment unit determines that the IO is a write IO, cache the write IO into the DRAM disk; or configured to: when the second judgment unit determines that the IO is a read IO, read data operated by the read IO from a bottom-layer storage device of the terminal, and cache the data in the DRAM disk.

The embodiments of the present invention provide a storage caching technology that is based on a DRAM dynamic random access memory, so that performance of random small-sized IOs on a terminal device is improved on a basis of an existing DRAM memory and a block storage device. Also, with the technology of the embodiments of the present invention, a problem of fragmentation of storage space caused by large quantities of random IOs and rewrite operations can be alleviated. In addition, the technology of the present invention allows differentiated caching for IOs, achieving improvement of performance.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may derive other drawings from these accompanying drawings without creative efforts.
FIG. 1 is a diagram of test data of IO write and IO rewrite performance before and after fragmentation of storage space according to an embodiment of the present invention;
FIG. 2 is a schematic diagram of a basic technological framework of a storage system according to an embodiment of the present invention;
FIG. 3 is a schematic diagram of an initialization scene of a DRAM-based storage caching method according to an embodiment of the present invention;
FIG. 4 is a flowchart of a DRAM-based storage caching method according to an embodiment of the present invention;
FIG. 5 is a write IO flowchart of a DRAM-based storage caching method according to an embodiment of the present invention;
FIG. 6 is a write IO flowchart of a DRAM-based storage caching method according to an embodiment of the present invention;
FIG. 7 is a write IO flowchart of a DRAM-based storage caching method according to an embodiment of the present invention;
FIG. 8 is a read IO flowchart of a DRAM-based storage caching method according to an embodiment of the present invention;
FIG. 9 is a read/write IO flowchart of a DRAM-based storage caching method according to an embodiment of the present invention;
FIG. 10 is a schematic diagram of an application scenario according to an embodiment of the present invention;
FIG. 11 is a schematic diagram of an application scenario according to an embodiment of the present invention;
FIG. 12 is a schematic structural diagram of a terminal provided with a DRAM according to an embodiment of the present invention; and
FIG. 13 is a schematic structural diagram of a terminal provided with a DRAM according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

To help a person of ordinary skill in the art better understand the technical solutions in the present invention, the following describes a basic technological framework of a storage system of the present invention.

Abbreviations and explanations that may be related in the embodiments of the present invention are as follows:
DRAM: Dynamic random access memory, dynamic random access memory;
OS: Operating System, operating system;
SSD: Solid State Drives, solid state drive;
eMMC: Embedded Multi Media Card, an embedded multimedia storage card;
PCM: Phase Change memory, phase change memory;
3D X-Point: A latest non-volatile storage device of Intel;
NVMe: Non-Volatile Memory Express, a non-volatile memory standard;
Writeback: Writing data to a back-end device later;
Writethrough: Writing data to a back-end device directly;
Back-end device: A target block device in which data is finally cached, where a DRAM is used as a cache for the device;
Master OS: An OS on which a system runs services in normal circumstances;
Slave OS: A standby OS that is pre-loaded into a memory when the system is started and does not run until crash of the master OS or proactive switching;
Small-sized IO: An IO with a relatively small IO size, for example, a 4 K read/write IO;
Large-sized IO: An IO with a relatively large IO size, for example, a 1 M read/write IO;
Sequential IO: A plurality of IOs that access continuous storage space addresses;
Random IO: IOs that access discontinuous storage space addresses;
Cold data: Data that is not frequently accessed by IOs;
Hot data: Data that needs to be frequently accessed by IOs.

FIG. 2 is a schematic diagram of a basic technological framework of a storage system according to an embodiment of the present invention. As shown in FIG. 2, the storage system in the present invention includes an operating system OS, a DRAM, and a bottom-layer block storage device, where
the operating system OS is loaded with a file system and various other apps.

A section of DRAM space is reserved in the DRAM. In this embodiment of the present invention, the section of DRAM space reserved in the DRAM is used as a DRAM disk to cache small-sized IO data or hot data, and the small-sized IO data or hot data is written back to a bottom-layer block storage device later when appropriate. Optionally, the bottom-layer storage device is a target block device into which data is finally cached, and may also be referred to as a back-end device. Correspondingly, as a cache of the bottom-layer block storage device, the DRAM is closer to a CPU, and may be considered as a front-end device.

In an embodiment, this reserved DRAM may be continuous space. In another embodiment, alternatively, this reserved DRAM section may be discontinuous space.

According to FIG. 2, the DRAM disk is located between the file system (FS) or upper-layer applications and the back-end device, and is used as a cache device of the block device.

The bottom-layer block storage device may be an EMMC, an SSD, an NVMe, or another storage device.

Optionally, the storage system may further include a slave OS. The slave OS is pre-loaded into the DRAM, and is started upon system crash. After the system crash, the slave OS runs and takes over a task executed by the prior OS, and flushes data in the DRAM disk cache back into the bottom-layer block storage device.

Further, the DRAM disk is a block device created by using a reserved DRAM. In an embodiment, this DRAM region is masked by using bottom-layer firmware, so that the DRAM is invisible to the OS, avoiding that the DRAM is allocated to another module by the operating system for use. In an embodiment, alternatively, this DRAM region may be set to be reserved when bottom-layer firmware reports system global memory information to the OS, to avoid allocation to another module.

Further, a size of the DRAM disk and a caching policy are both configurable, mainly for caching of small-sized IOs or IOs of hot data. When an IO is delivered by the FS, the IO is captured by a DRAM IO cache module, and the DRAM IO cache module checks whether caching is required. If the IO is a large-sized IO or cold data IO, caching is not required and the IO is directly delivered to a back-end block device; otherwise, data of the IO is cached into the DRAM disk.

This embodiment of the present invention provides a storage caching technology that is based on a DRAM dynamic random access memory. Based on an existing DRAM memory and a block storage device, the technology has low implementation costs, good scalability, high storage performance for random IOs, and low costs for commercial use. With the technology in this embodiment of the present invention, performance of small-sized random IOs on a terminal device is improved, and a problem of fragmentation of storage space caused by large quantities of random IOs and rewrite operations can also be alleviated. In addition, the technology of the present invention allows differentiated caching for IOs, thereby achieving optimum performance improvement. Finally, this technology can also effectively improve a service life of a flash storage device.

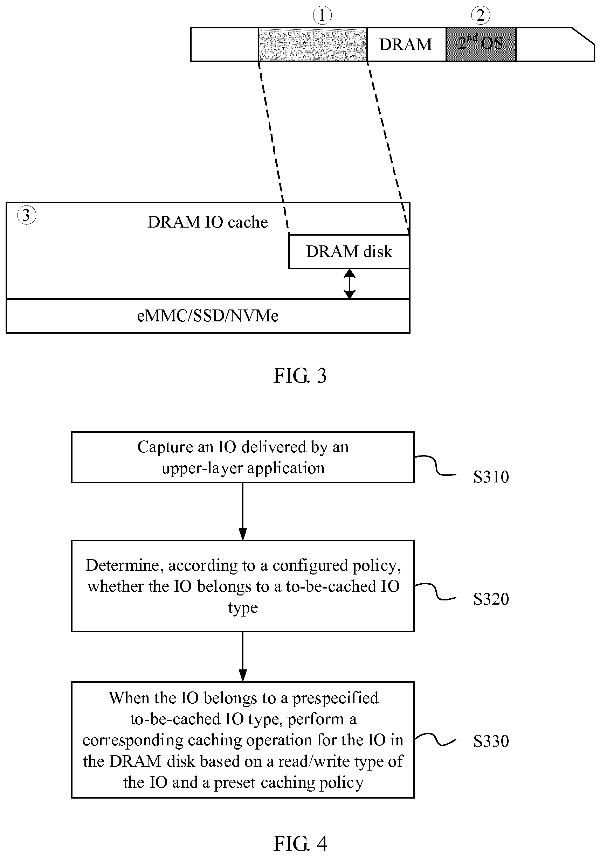

As shown in FIG. 3, an embodiment of the present invention provides a schematic diagram of an initialization scene of a DRAM-based storage caching method. According to FIG. 3:
1. A section of DRAM memory space is reserved upon system start. Optionally, this space may be presented as a disk device to a user or not presented to a user.
   Specifically:
   A: In a case of cold system start, a first page of the section of DRAM memory reserved upon initialization is all zeros, to avoid existence, in the DRAM, of invalid data that affects subsequent data caching.
   B: In a case of hot system start, data in this section of DRAM memory region is not changed.
2. Upon system start, a section of memory space is reserved to store a slave OS, and code of the slave OS is pre-loaded into the memory. For example, in a kdump mechanism, an OS start parameter is used to reserve a part of a system global memory to store the slave OS. This is not relevant to the foregoing reservation of the DRAM.
3. After the system initialization is completed, the system-reserved DRAM memory space is used to create a DRAM block device, and a back-end storage device is specified to bind the DRAM block device to the back-end storage device. To the outside, an abstract DRAM cache cache block device is presented. This device is provided for a user to perform operations (for example, formatting, and normal data read/write operations). When the user performs an IO operation on the device, the IO is first received by a DRAM cache module, and software determines, based on a pre-configured caching policy, whether caching is required for the IO.

Optionally, upon system crash, the slave OS is started and dirty data cached in the DRAM disk is flushed back proactively before a restart. Dirty data is a common technical definition in the database field. To be specific, a file is read into a memory for access; and if the data is not changed, the data is clean, or if the data is changed, the data is dirty data, and needs to be written back to a bottom-layer device, or else the updated data is lost. In other words, dirty data means that data cached in the DRAM disk is not consistent with data in the block device.

As shown in FIG. 4, an embodiment of the present invention provides a DRAM-based storage caching method. According to FIG. 4:
S310. Capture an IO delivered by an upper-layer application.
S320. Determine, according to based on a configuration policy, whether the IO belongs to a to-be-cached IO type.

Optionally, determining whether caching into a DRAM disk is required for the IO may be performed based on a size of the IO. Optionally, in another embodiment, this may alternatively be performed based on a cold/hot data type of the IO. Optionally, in another embodiment, this may be performed based on another policy specifying an IO type, or a decision whether caching into the DRAM disk is required is made based on a storage location of the IO in a back-end device. This is not particularly limited in this embodiment of the present invention.

S330. When the IO belongs to a prespecified to-be-cached IO type, perform a corresponding caching operation for the IO in a DRAM disk based on a read/write type of the IO and a preset caching policy. The DRAM disk is a block device created by using a reserved part of DRAM space of an operating system, and storage space of the block device is a reserved section of DRAM space in the DRAM.

In an embodiment, the caching policy includes write-back (a write-back mode) or write-through (a write-through mode).

This embodiment of the present invention provides a storage caching technology that is based on a DRAM dynamic random access memory. Based on an existing DRAM memory and a block storage device, the technology has low implementation costs, good scalability, high storage performance for random IOs, and low costs for commercial use.

With the technology in this embodiment of the present invention, performance of small-sized random IOs on a terminal device is improved, and a problem of fragmentation of storage space caused by large quantities of random IOs and rewrite operations can also be alleviated. In addition, the technology of the present invention allows differentiated caching for IOs, thereby achieving optimum performance improvement. Finally, this technology can also effectively improve a service life of a flash storage device.

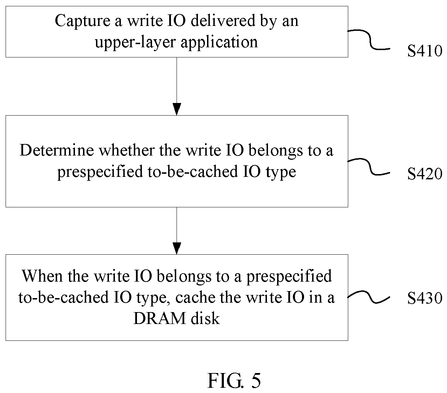

As shown in FIG. 5, an embodiment of the present invention provides a write IO procedure of a DRAM-based storage caching method. According to FIG. 5:
S410. Capture a write IO delivered by an upper-layer application.
S420. Determine whether the write IO belongs to a prespecified to-be-cached IO type.
   Optionally, determining whether caching into a DRAM disk is required for the IO may be performed based on a size of the IO. Optionally, in another embodiment, this may alternatively be performed based on a cold/hot data type of the IO. Optionally, in another embodiment, this may be performed based on another policy specifying an IO type, or a decision whether caching into the DRAM disk is required is made based on a storage location of the IO in a back-end device. This is not particularly limited in this embodiment of the present invention.
S430. When the write IO belongs to a prespecified to-be-cached IO type, cache the write IO in a DRAM disk, where the DRAM disk is a block device created by using a reserved part of DRAM space of an operating system, and storage space of the block device is a reserved section of DRAM space in the DRAM.

In an embodiment, the caching policy includes write-back (a write-back mode) or write-through (a write-through mode).

This embodiment of the present invention provides a storage caching technology that is based on a DRAM dynamic random access memory. Based on an existing DRAM memory and a block storage device, the technology has low implementation costs, good scalability, high storage performance for random IOs, and low costs for commercial use. With the technology in this embodiment of the present invention, performance of small-sized random IOs on a terminal device is improved, and a problem of fragmentation of storage space caused by large quantities of random IOs and rewrite operations can also be alleviated. In addition, the technology of the present invention allows differentiated caching for IOs, thereby achieving optimum performance improvement. Finally, this technology can also effectively improve a service life of a flash storage device.

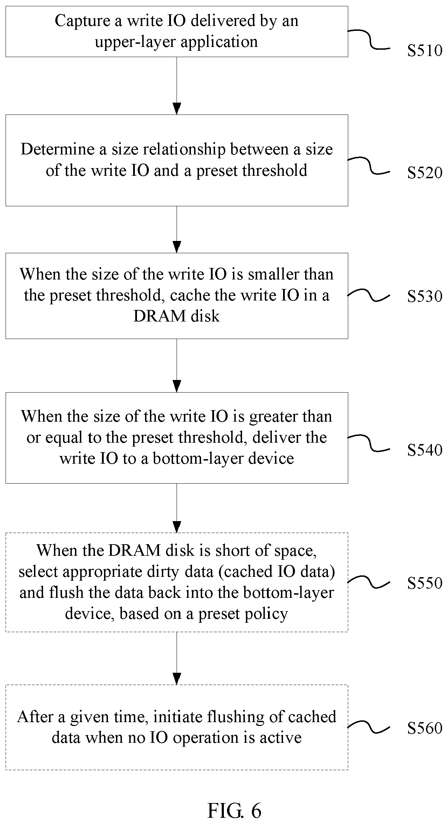

As shown in FIG. 6, an embodiment of the present invention provides a write IO procedure of a DRAM-based storage caching method. According to FIG. 6:
S510. Capture a write IO delivered by an upper-layer application.
S520. Determine a size relationship between a size of the write IO and a preset threshold, where the size of the write IO is a size of data operated by the write IO.
S530. When the size of the write IO is smaller than the preset threshold, cache the write IO in a DRAM disk, where the DRAM disk is a block device created by using a reserved DRAM, and storage space of the block device is a reserved section of DRAM space in the DRAM.

In an embodiment, the caching policy includes write-back (a write-back mode) or write-through (a write-through mode).

Write-back means that cached data is flushed into a block storage device at a later time, and at a time of a data update, data is written only to the cache cache (the above mentioned DRAM disk). Changed data is not written to the back-end storage until the data is replaced out of the cache. This mode is advantageous in a fast writing speed because writing to the storage is not required, while disadvantageous in that once a system power failure occurs before updated data is written to the storage, the data cannot be recovered.

Write-through means that data is directly written to a bottom-layer block device, and at a time of a data update, data is written to both the cache cache (the above-mentioned DRAM disk) and the back-end storage device. This mode is advantageous in ease of operation, while disadvantageous in a low data writing speed because changed data needs to be written also to the storage.

S540. When the size of the write IO is greater than or equal to the preset threshold, deliver the write IO to a bottom-layer device. In an embodiment, when the size of the write IO delivered by the upper-layer application is greater than or equal to the threshold, the write IO is directly delivered to the bottom-layer device without being cached in the DRAM disk.

Optionally, as a dashed box in FIG. 5 shows, the write IO procedure may further include the following step.

S550. When the DRAM disk is short of space, select appropriate dirty data (cached IO data) and flush the data back into the bottom-layer device, according to a preset policy.

Optionally, a data selection method may be LRU (Least Recently Used, the Least Recently Used algorithm), or may be using continuous dirty data occupying largest space. Dirty data is a common technical definition in the database field. To be specific, a file is read into a memory for access; and if the data is not changed, the data is clean, or if the data is changed, the data is dirty data, and needs to be written back to a bottom-layer device, or else the updated data is lost. In other words, dirty data means that data cached in the DRAM disk is not consistent with data in the block device.

Alternatively, when continuous dirty data of a large enough size (for example, greater than a threshold) is accumulated in the DRAM disk, the continuous dirty data is flushed back into the bottom-layer device.

Optionally, as a dashed box in FIG. 6 shows, the write IO procedure may further include the following step.

S560. After a given time, initiate flushing of cached data when no IO operation is active. To be specific, after the given time, the cached data is flushed back to the bottom-layer device when no IO operation is active.

In this embodiment, determining whether caching into the DRAM disk is required for the IO may be performed based on a size of the IO. Optionally, in another embodiment, this may alternatively be performed based on a cold/hot data type of the IO. Optionally, in another embodiment, this may be performed based on another policy specifying an IO type, or a decision whether caching into the DRAM disk is required is made based on a storage location of the IO in a back-end device.

This embodiment of the present invention provides a storage caching technology that is based on a DRAM dynamic random access memory. Based on an existing DRAM memory and a block storage device, the technology has low implementation costs, good scalability, high storage performance for random IOs, and low costs for commercial use. With the technology in this embodiment of the present invention, performance of small-sized random IOs on a terminal device is improved, and a problem of fragmentation of storage space caused by large quantities of random IOs and rewrite operations can also be alleviated. In addition, the technology of the present invention allows differentiated caching for IOs, thereby achieving optimum performance improvement. Finally, this technology can also effectively improve a service life of a flash storage device.

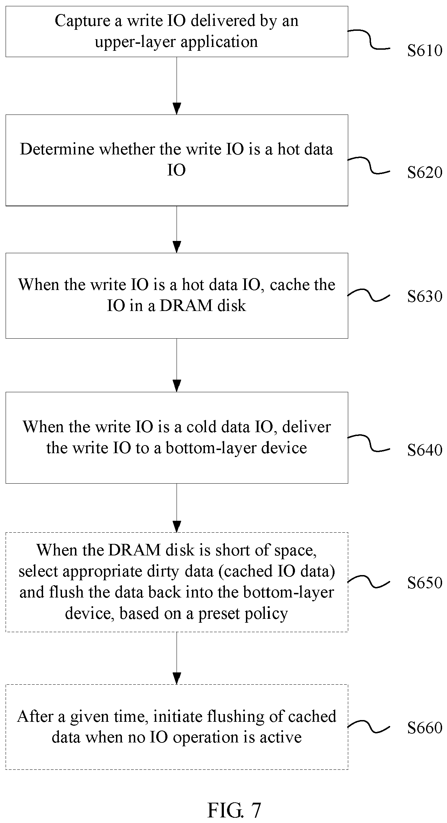

As shown in FIG. 7, an embodiment of the present invention provides a write IO procedure of a DRAM-based storage caching method. According to FIG. 7:
S610. Capture a write IO delivered by an upper-layer application.
S620. Determine whether the write IO is a hot data IO.

In an embodiment, it needs to be determined whether data operated by the write IO is hot data. In other words, it needs to be determined whether the write IO is a hot data IO.

In an embodiment, determining whether the write IO is a hot data IO may be performed according to based on a configuration policy. For example, determining whether the data is cold or hot data may be performed based on a recent access frequency and a type of the write IO. For example, In an embodiment, an IO on a directory file may be considered as hot data. That is, when the write IO is a directory file IO, the write IO is considered to be a hot data IO.

S630. When the write IO is a hot data IO, cache the IO in a DRAM disk, where the DRAM disk is a block device created by using a reserved DRAM, and storage space of the block device is a reserved section of DRAM space in the DRAM.

In an embodiment, the caching policy includes write-back (a write-back mode) or write-through (a write-through mode).

Write-back means that cached data is flushed into a block storage device at a later time, and at a time of a data update, data is written only to the cache cache (the above mentioned DRAM disk). Changed data is not written to the back-end storage until the data is replaced out of the cache. This mode is advantageous in a fast writing speed because writing to the storage is not required, while disadvantageous in that once a system power failure occurs before updated data is written to the storage, the data cannot be recovered.

Write-through means that data is directly written to a bottom-layer block device, and at a time of a data update, data is written to both the cache cache (the above-mentioned DRAM disk) and the back-end storage device. This mode is advantageous in ease of operation, while disadvantageous in a low data writing speed because changed data needs to be written also to the storage.

S640. When the write IO is a cold data IO, deliver the write IO to a bottom-layer device. In an embodiment, when the write IO delivered by the upper-layer application is a cold data IO, the IO is directly delivered to the bottom-layer device, without being cached in the DRAM disk.

Optionally, as a dashed box in FIG. 7 shows, the write IO procedure may further include the following step.

S650. When the DRAM disk is short of space, select appropriate dirty data (cached IO data) and flush the data back into the bottom-layer device, according to a preset policy.

Optionally, a data selection method may be LRU (Least Recently Used, the Least Recently Used algorithm), or may be using continuous dirty data occupying largest space. Dirty data is a common technical definition in the database field. To be specific, a file is read into a memory for access; and if the data is not changed, the data is clean, or if the data is changed, the data is dirty data, and needs to be written back to a bottom-layer device, or else the updated data is lost.

Alternatively, when continuous dirty data of a large enough size (for example, greater than a threshold) is accumulated in the DRAM disk, the continuous dirty data is flushed back into the bottom-layer device.

Optionally, as a dashed box in FIG. 7 shows, the write IO procedure may further include the following step.

S660. After a given time, initiate flushing of cached data when no IO operation is active. To be specific, after the given time, the cached data is flushed back to the bottom-layer device when no IO operation is active.

In this embodiment, determining whether caching into the DRAM disk is required for the IO is performed based on a cold/hot data type of the IO. Optionally, in another embodiment, this may be performed based on a size of the IO or another policy specifying an IO type, or a decision whether caching into the DRAM disk is required is made based on a storage location of the IO in a back-end device.

This embodiment of the present invention provides a storage caching technology that is based on a DRAM dynamic random access memory. Based on an existing DRAM memory and a block storage device, the technology has low implementation costs, good scalability, high storage performance for random IOs, and low costs for commercial use. With the technology in this embodiment of the present invention, performance of small-sized random IOs on a terminal device is improved, and a problem of fragmentation of storage space caused by large quantities of random IOs and rewrite operations can also be alleviated. In addition, the technology of the present invention allows differentiated caching for IOs, thereby achieving optimum performance improvement. Finally, this technology can also effectively improve a service life of a flash storage device.

With the DRAM disk caching mechanism implemented by using software in this embodiment of the present invention, performance of small-sized IOs and synchronous write IOs can be significantly improved, so that an overall IO throughput is significantly improved, and a current problem encountered by a terminal that a system runs slower as being used more. In addition, in this embodiment of the present invention, back erasure and writing by random IOs on a block device such as a flash device can be reduced, thereby reducing an amount of storage space debris, and prolonging a service life of a flash device such as an eMMC.

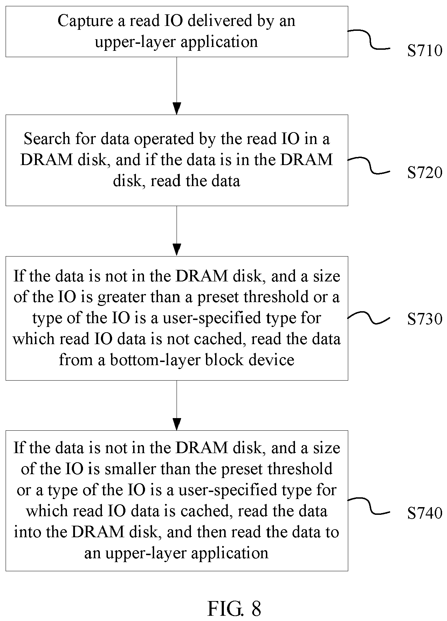

As shown in FIG. 8, an embodiment of the present invention provides a read IO procedure of a DRAM-based storage caching method. According to FIG. 8:
S710. Capture a read IO delivered by an upper-layer application.
S720. Search for data operated by the read IO in a DRAM disk, and if the data is in the DRAM disk, read the data.
S730. If the data is not in the DRAM disk, and a size of the IO is greater than a preset threshold or a type of the IO is a user-specified type for which read IO data is not cached (for example, a cold data IO), read the data from a bottom-layer block device.
S740. If the data is not in the DRAM disk, and a size of the IO is smaller than the preset threshold or a type of the IO is a user-specified type for which read IO data is cached (for example, a hot data IO), write the data into the DRAM disk, and then read the data to an upper-layer application. In this step, the user does not forbid reading the IO cache.

Optionally, determining whether caching into the DRAM disk is required for the IO may be performed based on a cold/hot data type of the IO. Optionally, in another embodiment, this may be performed based on a size of the IO or another policy specifying an IO type, or a decision whether caching into the DRAM disk is required is made based on a storage location of the IO in a back-end device. This is not particularly limited in this embodiment of the present invention.

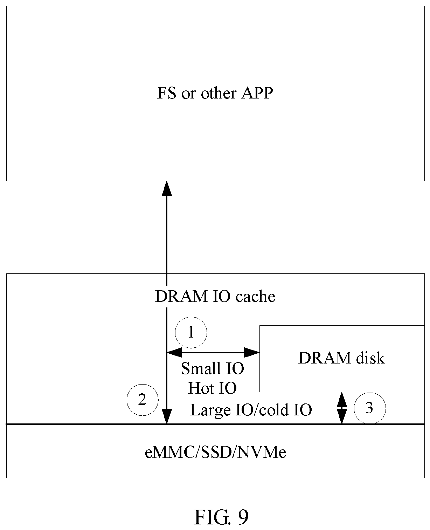

The embodiments of the read/write procedures in FIG. 5, FIG. 6, FIG. 7, and FIG. 8 may be vividly depicted in FIG. 9. A brief description is as follows.
1. Perform determining on a delivered IO. For example, determine a size of the IO or determine whether the IO is a hot data IO or a cold data IO. If the IO is a hot data IO or the size of the IO is smaller than a preset threshold, cache the IO in a DRAM disk.
2. If the IO is a cold data IO or the size of the IO is greater than a preset threshold, directly deliver the IO to a bottom-layer device (eMMC, SSD, or NVMe), without caching the IO in the DRAM disk.
3. After a given time, initiate flushing of cached data when no IO operation is active. To be specific, after the given time, the cached data is flushed back to the bottom-layer device when no IO operation is active.

A specific method has been described in the foregoing embodiments and is not repeated.

Optionally, in the read/write operation procedure, in a case of a switch-off or a restart, the operations may be specifically performed according to the following steps.

In a case of a normal switch-off, before the switch-off, all dirty data cached in the DRAM disk is flushed back into the bottom-layer device, and caching is disabled or a caching policy is set to write-through, and then a switch-off procedure follows. In an embodiment, the normal switch-off is a switch-off performed in accordance with a normal procedure.

In a case of a forced switch-off, at the beginning of the forced switch-off or a restart, dirty data is flushed back proactively, and caching is disabled or a caching policy is set to write-through. If a user cancels the forced action, caching is enabled again or an original caching policy is resumed. In an embodiment, the forced switch-off means a switch-off that is performed not in a normal way, for example, a switch-off caused by low battery or a switch-off caused by unloading of a battery.

In a case of a restart, data flushing may be selected or not selected.

This embodiment of the present invention provides a storage caching technology that is based on a DRAM dynamic random access memory. Based on an existing DRAM memory and a block storage device, the technology has low implementation costs, good scalability, high storage performance for random IOs, and low costs for commercial use. With the technology in this embodiment of the present invention, performance of small-sized random IOs on a terminal device is improved, and a problem of fragmentation of storage space caused by large quantities of random IOs and rewrite operations can also be alleviated. In addition, the technology of the present invention allows differentiated caching for IOs, thereby achieving optimum performance improvement. Finally, this technology can also effectively improve a service life of a flash storage device.

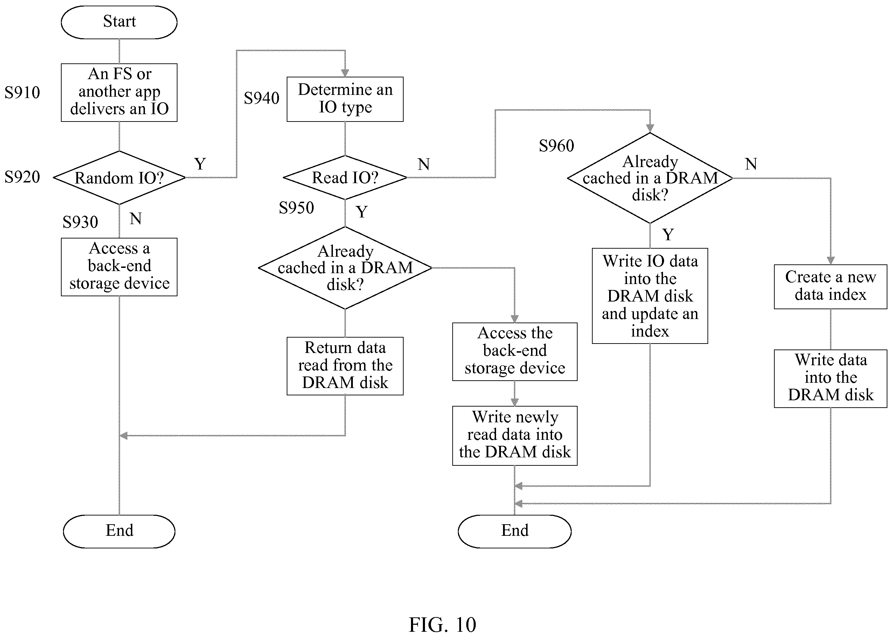

As shown in FIG. 10, an embodiment of the present invention provides an application scenario. In this embodiment, a random IO is cached in a DRAM disk, thereby improving IO performance of a system.

In this application scenario embodiment, a part of DRAM space is reserved through pre-configuration, to be used as a DRAM disk. When the DRAM disk is used for a first time, a DRAM disk driver creates a block device DRAM disk by using the reserved DRAM space, and binds the DRAM disk to a back-end block device based on a user-preconfiguration policy to form a DRAM disk cache device. Through configuration, a user specifies a caching policy for the DRAM disk to be write-back, and sets a type of a to-be-cached IO to a random IO.

S910. The user delivers an IO.

S920. The DRAM disk driver captures the IO and determines, based on the configuration policy, whether the IO is a random IO (random IOs are IOs accessing discontinuous storage space addresses, while sequential IOs access continuous block device addresses).

S930. If the IO is a sequential IO, the DRAM disk bypasses the IO.

S940. If the IO is a random IO, determine a read/write type of the IO.

S950. If the IO is a read IO, search for corresponding data in the DRAM disk; and if the data is found, return the data to an upper layer, or if the data is not found, initiate a read IO request to the back-end block device and cache read data in the DRAM disk.

S960. If the IO is a write IO, search for data corresponding to a block device location in the DRAM disk; and if the data is found, overwrite the data, or if the data is not found, write new data into the DRAM disk, and update index management data.

This embodiment of the present invention provides a storage caching technology that is based on a DRAM dynamic random access memory. Based on an existing DRAM memory and a block storage device, the technology has low implementation costs, good scalability, high storage performance for random IOs, and low costs for commercial use. With the technology in this embodiment of the present invention, performance of small-sized random IOs on a terminal device is improved, and a problem of fragmentation of storage space caused by large quantities of random IOs and rewrite operations can also be alleviated. In addition, the technology of the present invention allows differentiated caching for IOs, thereby achieving optimum performance improvement. Finally, this technology can also effectively improve a service life of a flash storage device.

With the DRAM disk caching mechanism implemented by using software in this embodiment of the present invention, performance of small-sized IOs and synchronous write IOs can be significantly improved, so that an overall IO throughput is significantly improved, and a current problem encountered by a terminal that a system runs slower as being used more. In addition, in this embodiment of the present invention, back erasure and writing by random IOs on a block device such as a flash device can be reduced, thereby reducing an amount of storage space debris, and prolonging a service life of a flash device such as an eMMC.

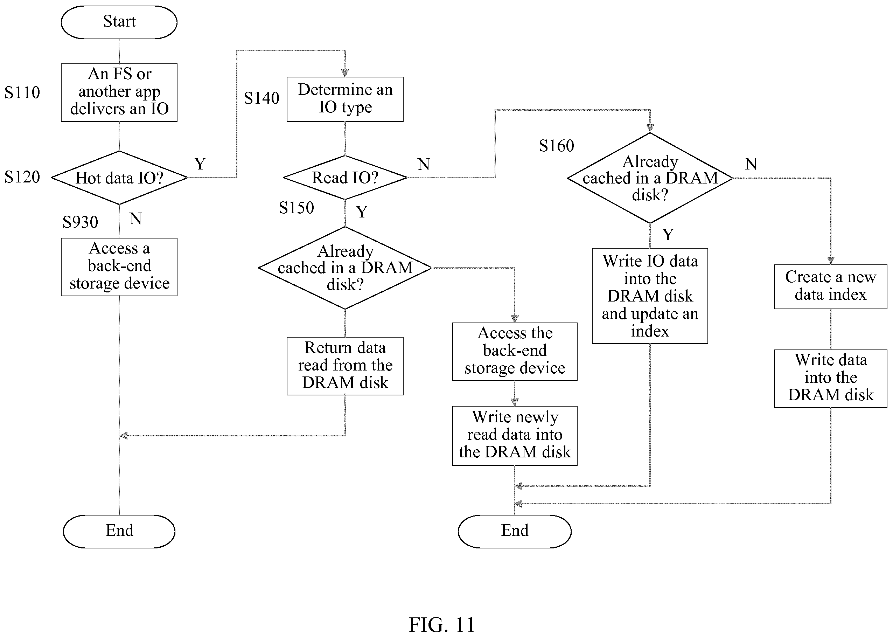

As shown in FIG. 11, an embodiment of the present invention provides an application scenario. In this embodiment, cold and hot data IOs are cached in a DRAM disk, thereby improving IO performance of a system.

In this application scenario embodiment, a part of DRAM space is reserved through pre-configuration, to be used as a DRAM disk. When the DRAM disk is used for a first time, a DRAM disk driver creates a block device DRAM disk by using the reserved DRAM space, and binds the DRAM disk to a back-end block device to form a DRAM disk cache device. Through configuration, a user specifies a caching policy for the DRAM disk to be write-back, and sets a type of a to-be-cached IO to a hot data IO. A policy for differentiating cold and hot data may be user-configured. Classification of cold and hot data includes but is not limited to, directory files and normal files, metadata and normal data, other data types that a service is aware of, and the like.

S110. The user delivers an IO.

S120. The DRAM disk driver captures the IO, and determines, based on the configuration policy, whether the IO is a hot data IO.

S130. If the IO is a cold data IO, the DRAM disk bypasses the IO.

S140. If the IO is a hot data IO, determine a read/write type of the IO.

S150. If the IO is a read IO, search for corresponding data in the DRAM disk; and if the data is found, return the data to an upper layer, or if the data is not found, initiate a read IO request to the back-end block device and cache read data in the DRAM disk.

S160. If the IO is a write IO, search for data corresponding to a block device location in the DRAM disk; and if the data is found, overwrite the data, or if the data is not found, write new data into the DRAM disk, and update index management data.

This embodiment of the present invention provides a storage caching technology that is based on a DRAM dynamic random access memory. Based on an existing DRAM memory and a block storage device, the technology has low implementation costs, good scalability, high storage performance for random IOs, and low costs for commercial use. With the technology in this embodiment of the present invention, performance of small-sized random IOs on a terminal device is improved, and a problem of fragmentation of storage space caused by large quantities of random IOs and rewrite operations can also be alleviated. In addition, the technology of the present invention allows differentiated caching for IOs, thereby achieving optimum performance improvement. Finally, this technology can also effectively improve a service life of a flash storage device.

With the DRAM disk caching mechanism implemented by using software in this embodiment of the present invention, performance of small-sized IOs and synchronous write IOs can be significantly improved, so that an overall IO throughput is significantly improved, and a current problem encountered by a terminal that a system runs slower as being used more. In addition, in this embodiment of the present invention, back erasure and writing by random IOs on a block device such as a flash device can be reduced, thereby reducing an amount of storage space debris, and prolonging a service life of a flash device such as an eMMC.

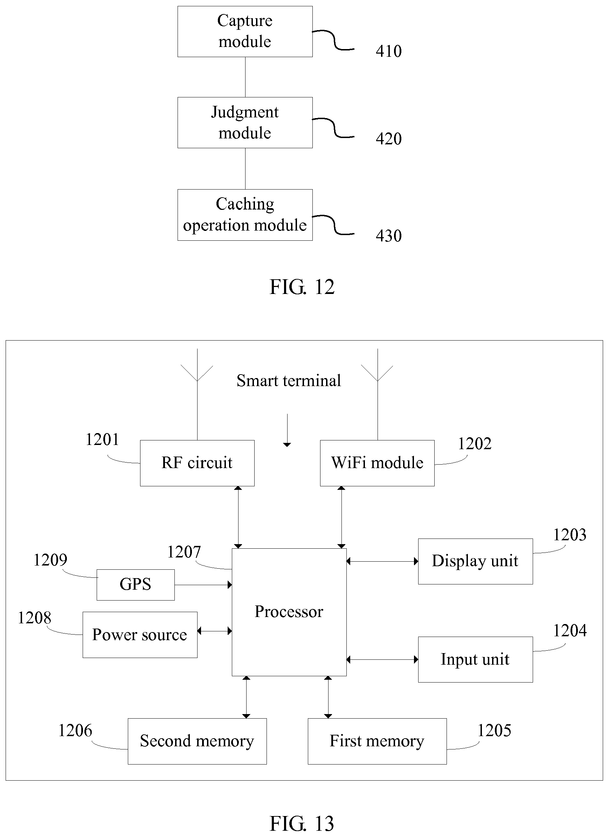

As shown in FIG. 12, an embodiment of the present invention provides a terminal provided with a DRAM, and the terminal includes a capture module 410, a judgment module 420, and a caching operation module 430.

The capture module 410, configured to capture an IO delivered by an upper-layer application.

The judgment module 420, configured to determine, according to based on a configuration policy, whether the IO captured by the capture module 410 belongs to a to-be-cached IO type.

Optionally, determining whether caching into a DRAM disk is required for the IO may be performed based on a size of the IO. Optionally, in another embodiment, this may alternatively be performed based on a cold/hot data type of the IO. Optionally, in another embodiment, this may be performed based on another policy specifying an IO type, or a decision whether caching into the DRAM disk is required is made based on a storage location of the IO in a back-end device. This is not particularly limited in this embodiment of the present invention.

When the IO captured by the capture module 410 belongs to a prespecified to-be-cached IO type, the caching operation module 430 performs a corresponding caching operation for the IO in the DRAM disk based on a read/write type of the IO and a preset caching policy. The DRAM disk is a block device created by using a reserved part of DRAM space of an operating system, and storage space of the block device is a reserved section of DRAM space in the DRAM.

In an embodiment, the caching policy includes write-back (a write-back mode) or write-through (a write-through mode).

Optionally, the judgment module 420 specifically includes:
a first judgment unit 421, configured to determine a size relationship between a size of the IO captured by the capture module 410 and a preset threshold, where the size of the write IO is a size of data operated by the write IO; and
a determining unit 422, configured to: when the first judgment unit 421 determines that the size of the IO is smaller than the preset threshold, determine that the IO belongs to a to-be-cached IO type.

In this case, the caching operation module 430 specifically includes:
a second judgment unit 431, configured to: when the first judgment unit determines that the size of the IO is smaller than the preset threshold, determine a read/write IO type of the IO; and
a caching unit 432, configured to: when the second judgment unit 431 determines that the IO is a write IO, cache the write IO in the DRAM disk.

Optionally, the caching unit 432 more specifically includes:
a search subunit 4321, configured to: in a case of a write IO, search for data corresponding to a block device location in the DRAM disk; and
an operation subunit 4322, configured to: when the search unit 431 finds the corresponding data in the DRAM disk, overwrite the corresponding data with data operated by the write IO; or if the search unit 431 does not find the corresponding data in the DRAM disk, write data operated by the write IO into the DRAM disk, and update index management data.

Optionally,
the caching unit 432 is configured to: when the second judgment unit 431 determines that the IO is a read IO, read data operated by the read IO from the bottom-layer storage device of the terminal, and cache the data in the DRAM disk.

Optionally, the caching unit 432 more specifically includes:
a search subunit 4321, configured to: in a case of a read IO, search for corresponding data in the DRAM disk; and
an operation subunit 4322, configured to: when the search unit 431 finds the corresponding data in the DRAM disk, return the corresponding data to the upper layer; or if the search unit 431 does not find the corresponding data in the DRAM disk, initiate a read IO request to the back-end block device, and cache read data into the DRAM disk.

Optionally, the judgment module 420 specifically includes:
a first judgment unit 421, configured to determine whether the IO captured by the capture module 410 is a hot data IO or a random IO; and
a determining unit 422, configured to: when the first judgment unit 421 determines that the IO is a hot data IO or a random IO, determine that the IO belongs to a to-be-cached IO type.

In this case, the caching operation module 430 is specifically configured to:
when the first judgment unit determines that the IO is a hot data IO or a random IO, and the second judgment unit determines that the IO is a write IO, cache the write IO into the DRAM disk.

Optionally, the caching unit 432 more specifically includes:
a search unit 4321, configured to: in a case of a write IO, search for data corresponding to a block device location in the DRAM disk; and
an operation unit 4322, configured to: when the search unit 431 finds the corresponding data in the DRAM disk, overwrite the corresponding data with data operated by the write IO; or if the search unit 431 does not find the corresponding data in the DRAM disk, write data operated by the write IO into the DRAM disk, and update index management data.

In this case, the caching operation module 430 is specifically configured to:
when the first judgment unit determines that the IO is a hot data IO or a random IO, and the second judgment unit determines that the IO is a read IO, read data operated by the read IO from the bottom-layer storage device of the terminal and cache the data in the DRAM disk.

Optionally, the caching unit 432 more specifically includes:
a search unit 4321, configured to: in a case of a read IO, search for corresponding data in the DRAM disk; and
an operation subunit 4322, configured to: when the search unit 431 finds the corresponding data in the DRAM disk, return the corresponding data to the upper layer; or if the search unit 431 does not find the corresponding data in the DRAM disk, initiate a read IO request to the back-end block device, and cache read data into the DRAM disk.

This embodiment of the present invention provides a storage caching technology that is based on a DRAM dynamic random access memory. Based on an existing DRAM memory and a block storage device, the technology has low implementation costs, good scalability, high storage performance for random IOs, and low costs for commercial use. With the technology in this embodiment of the present invention, performance of small-sized random IOs on a terminal device is improved, and a problem of fragmentation of storage space caused by large quantities of random IOs and rewrite operations can also be alleviated. In addition, the technology of the present invention allows differentiated caching for IOs, thereby achieving optimum performance improvement. Finally, this technology can also effectively improve a service life of a flash storage device.

With the DRAM disk caching mechanism implemented by using software in this embodiment of the present invention, performance of small-sized IOs and synchronous write IOs can be significantly improved, so that an overall IO throughput is significantly improved, and a current problem encountered by a terminal that a system runs slower as being used more. In addition, in this embodiment of the present invention, back erasure and writing by random IOs on a block device such as a flash device can be reduced, thereby reducing an amount of storage space debris, and prolonging a service life of a flash device such as an eMMC.

FIG. 13 is a schematic structural diagram of a smart terminal according to an embodiment of the present invention. The smart terminal includes hardware modules such as an RF circuit 1201, a Wi-Fi module 1202, a display unit 1203, an input unit 1204, a first memory 1205, a second memory 1206, a processor 1207, a power source 1208, and a GPS module 1209. The terminal 1200 may be a mobile phone, a tablet computer, a PDA (Personal Digital Assistant, personal digital assistant), a in-vehicle computer, or the like.

The RF circuit 1201 is configured to send and receive communication signals, and is capable of measuring a distance to an anchor point through radio packet interaction.

The Wi-Fi module 1202 is configured to connect to a network and scan for a network signal. The RF circuit 1201 and/or the Wi-Fi module 1202 may contact with a radio base station to obtain current position coordinates of the smart terminal.

The display unit 1203 is configured to display a user interaction interface, and the display unit 1203 may be configured to display information entered by a user or information provided to the user, and various menu pages of the smart terminal. The display unit 1203 may include a display panel. Optionally, the display panel may be configured in a form of an LCD (Liquid Crystal Display, liquid crystal display), an OLED (Organic Light-Emitting Diode, organic light-emitting diode), or the like. In specific implementation, the touch panel covers the display panel to form a touch display, and the processor 1207 provides corresponding visual output on the touch display based on a type of a touch event.

The input unit 1204 may be configured to: receive input digit or character information, receive an interface operation of a user for application switching and generate a switching signal, and generate signal input relevant to user setting and function controlling of the terminal. Specifically, in this embodiment of the present invention, the input unit 1204 may include a touch panel, or referred to as a touchscreen, and may collect touch operations of a user on or near the touchscreen (for example, an operation performed by a user on the touch panel by using any appropriate object or accessory such as a finger or a stylus). The touch panel may be implemented in various types, such as a resistive type, a capacitive type, an infrared type, and a surface acoustic wave type. In addition to the touch panel, the input unit 1204 may further include other input devices. The other input devices may include but are not limited to one or more of a physical keyboard, a function key (for example, a volume control key or a power on/off key), a trackball, a mouse, and a joystick, and the like.

The first memory 1205 stores an operating system of the terminal, a preset quantity of apps, and interface information. It may be understood that the second memory 1206 may be a secondary storage of the terminal 1200, and the first memory 1205 may be a primary storage of the smart terminal, for example, a DRAM. The first memory 1205 may be one of an NVRAM non-volatile dynamic random access memory, a DRAM dynamic random memory, an SRAM static random access memory, a flash flash, and the like. The operating system running on the smart terminal is usually installed in the first memory 1205. The second memory 1206 may be hard disk, an optical disc, a USB flash drive, a floppy disk or tape drive, a cloud server, or the like. Optionally, currently some third-party apps may also be installed in the second memory 1206.

The processor 1207 is a control center of the smart terminal, connects various parts of the entire terminal by using various interfaces and lines, and runs or executes software programs and/or modules stored in the first memory 1205 and calls data stored in the second memory 1206, to perform various functions of the smart terminal and/or process data. Optionally, the processor 1207 may include one or more processing units.

The power source 1208 may supply power to the entire terminal, and includes various types of lithium batteries.

The GPS module 1209 is configured to obtain position coordinates of the smart terminal.

When a program or operating system installed in the first memory 1205 receives an instruction of the processor, the following steps are executed.

S1210. Capture an IO delivered by an upper-layer application.

S1220. Determine, according to based on a configuration policy, whether the IO belongs to a prespecified to-be-cached IO type.

Optionally, determining whether caching into a DRAM disk is required for the IO may be performed based on a size of the IO. Optionally, in another embodiment, this may alternatively be performed based on a cold/hot data type of the IO. Optionally, in another embodiment, this may be performed based on another policy specifying an IO type, or a decision whether caching into the DRAM disk is required is made based on a storage location of the IO in a back-end device. This is not particularly limited in this embodiment of the present invention.

For specific steps of the determining whether the IO belongs to a prespecified to-be-cached IO type, refer to the descriptions of the foregoing embodiments. Details are not repeated herein.

S1230. When the IO belongs to a prespecified to-be-cached IO type, perform a corresponding caching operation for the IO in a DRAM disk based on a read/write type of the IO and a preset caching policy. The DRAM disk is a block device created by using a reserved part of DRAM space of an operating system, and storage space of the block device is a reserved section of DRAM space in the DRAM.

Specifically, for how the corresponding caching operation is performed for the IO based on the read/write type of the IO and the preset caching policy, reference may be made to the descriptions of the foregoing embodiments, for example, relevant descriptions of the embodiments corresponding to FIG. 5 to FIG. 10. Details are not repeated herein.

In an embodiment, the caching policy includes write-back (a write-back mode) or write-through (a write-through mode).

This embodiment of the present invention provides a storage caching technology that is based on a DRAM dynamic random access memory. Based on an existing DRAM memory and a block storage device, the technology has low implementation costs, good scalability, high storage performance for random IOs, and low costs for commercial use. With the technology in this embodiment of the present invention, performance of small-sized random IOs on a terminal device is improved, and a problem of fragmentation of storage space caused by large quantities of random IOs and rewrite operations can also be alleviated. In addition, the technology of the present invention allows differentiated caching for IOs, thereby achieving optimum performance improvement. Finally, this technology can also effectively improve a service life of a flash storage device.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disc, an optical disc, a read-only memory (Read-Only Memory, ROM), or a random access memory (Random Access Memory, RAM).

The foregoing are merely several embodiments of the present invention. A person skilled in the art may make various modifications and variations to the present invention without departing from the spirit and scope of the present invention.

## Claims

1. A DRAM-based storage caching method, applied to a smart terminal, wherein the method comprises:
capturing an IO delivered by an upper-layer application;
determining, according to based on a configuration policy, whether the IO belongs to a to-be-cached IO type; and
when the IO belongs to a prespecified to-be-cached IO type, performing a corresponding caching operation for the IO in a DRAM disk based on a read/write type of the IO and a preset caching policy, wherein the DRAM disk is a block device created by using a reserved part of DRAM space of an operating system.

2. The caching method according to claim 1, wherein the determining, according to based on a configuration policy, whether the IO belongs to a prespecified to-be-cached IO type comprises:
determining a size relationship between a size of the IO and a preset threshold; and
when the size of the IO is smaller than the preset threshold, determining that the IO belongs to a to-be-cached IO type.

3. The caching method according to claim 1, wherein the determining, according to based on a configuration policy, whether the IO belongs to a prespecified to-be-cached IO type specifically comprises:
determining whether a type of the IO is a user-prespecified IO type; and
when the type of the IO is a user-prespecified IO type, determining that the IO belongs to a to-be-cached IO type, wherein the user-prespecified IO type is a hot data IO or a random IO.

4. The caching method according to any one of claims 1 to 3, wherein the performing a corresponding caching operation for the IO in a DRAM disk based on a read/write type of the IO and a preset caching policy comprises:
determining a read/write type of the IO; and
when the IO is a write IO, caching the write IO in the DRAM disk; or
when the IO is a read IO, reading data operated by the read IO and caching the data in the DRAM disk.

5. The caching method according to any one of claims 1 to 3, wherein the method further comprises:
when the DRAM disk is short of space, selecting to flush dirty data back into a bottom-layer device according to a preset policy.

6. The caching method according to any one of claims 1 to 5, wherein the method further comprises:
in a case of a normal switch-off of the smart terminal, before the switch-off, flushing all dirty data cached in the DRAM disk back into the bottom-layer device, and disabling caching or setting the caching policy to write-through.

7. The caching method according to any one of claims 1 to 6, wherein the method further comprises:
in a case of a forced switch-off or a restart of the smart terminal, at the beginning of the forced switch-off or the restart, flushing back the dirty data, and disabling caching or setting the caching policy to write-through.

8. A terminal provided with a DRAM, wherein the terminal comprises:
a capture module, configured to capture an IO delivered by an upper-layer application;
a judgment module, configured to determine, according to based on a configuration policy, whether the IO captured by the capture module belongs to a to-be-cached IO type; and
a caching operation module, configured to: when the IO captured by the capture module belongs to a to-be-cached IO type, perform a corresponding caching operation for the IO in a DRAM disk based on a read/write type of the IO and a preset caching policy, wherein the DRAM disk is a block device created by using a reserved part of DRAM space of an operating system of the terminal.

9. The terminal according to claim 8, wherein the judgment module comprises:
a first judgment unit, configured to determine a size relationship between a size of the IO captured by the capture module and a preset threshold; and
a determining unit, configured to: when the first judgment unit determines that the size of the IO is smaller than the preset threshold, determine that the IO belongs to a to-be-cached IO type.

10. The terminal according to claim 8, wherein the judgment module comprises:
a first judgment unit, configured to determine whether a type of the IO is a user-prespecified IO type; and
a determining unit, configured to: when the first judgment unit determines that the type of the IO is a user-prespecified IO type, determine that the IO belongs to a to-be-cached IO type, wherein the user-prespecified IO type is a hot data IO or a random IO.

11. The terminal according to claim 9 or 10, wherein the caching operation module comprises:
a second judgment unit, configured to: when the first judgment unit determines that the size of the IO is smaller than the preset threshold or that the type of the IO is a user-prespecified IO type, determine a read/write type of the IO; and
a caching unit, configured to: when the second judgment unit determines that the IO is a write IO, cache the write IO into the DRAM disk; or configured to: when the second judgment unit determines that the IO is a read IO, read data operated by the read IO from a bottom-layer storage device of the terminal, and cache the data in the DRAM disk.
